# EUROPEAN PATENT APPLICATION

(11) **EP 1 935 852 A1**
(43) Date of publication of application: **25.06.2008**
(21) Application number: 06026190.6
(22) Date of filing: 18.12.2006
(51) Int. Cl.: C02F 5/10, C08L 35/00, C11D 3/37, C07C 59/00

(54) **Water softener composition**

(71) Applicant: Dalli-Werke GmbH & Co. KG, 52224 Stolberg (DE)
(72) Inventor: Van Boven, Cathy, 8251 PZ Dronten (NL); De Boer, Robbert, 8167 PH Oene (NL); Van Ommen, Janco, 8031 EZ Zwolle (NL)
(74) Representative: Polypatent

(57) **Abstract**

It is provided a composition as a soluble water softener composition or for the preparation of a soluble water softener or detergent composition comprising in addition to optional adjuvants and additives: a) one or more polycarboxylic acid homopolymer(s) or salt(s) thereof in an amount of 1 to 90 wt.-%, b) one or more low molecular polycarboxylic acid(s) or salt(s) thereof in an amount of 1 to 90 wt.-%, and c) one or more copolymer(s) based on maleic acid or (meth)acrylic acid or salt(s) thereof in an amount of 0.1 to 25 wt.%, wherein the one or more comonomer(s) is/are selected from the group comprising i) hydrophobic monomers, ii) hydrophobic monomers with one or more hydrophilic group(s), and iii) hydrophilic monomers with hydrophilic groups. There are further provided certain co-granulates comprising at least two of the essential ingredients of the composition, detergent formulations comprising the composition, the co-granulate and a tablet comprising the composition, the co-granulate or the detergent formulation. Furthermore, there are provided methods for the preparation of the co-granulates.

## Description

### TECHNICAL FIELD

The present invention relates to a water soluble composition, for example a water softener composition and a co-granulate comprising the composition. The invention further relates to a laundry or automatic dishwashing detergent formulation comprising the composition or the co-granulate. Another object of the present invention is a tablet comprising the composition, the co-granulate or the detergent formulation. A further object of the present invention are methods for the preparation of the co-granulate.

### BACKGROUND ART

It is well known that certain metal compounds, notably calcium compounds, when present in water, have a significant effect on the properties of the water. For example, "hard" water containing a significant loading of soluble calcium and magnesium compounds may require a large amount of soap or detergent in order to form a lather. Scale deposits can readily form from such water, for example on heating or pH change or evaporation. These can be encrustations, or watermarks left on evaporation of water droplets from, especially, a shiny surface.

There have been many proposals for removal of metal ions from aqueous solutions. In the industrial context proposals have included filter beds and polymeric filters for capturing heavy metal ions from an aqueous solution flowing within a passageway. Examples are given in EP-A-99 22 38 and GB-A-20869564.

The products on the market today are typically based on zeolites, polymers, phosphates and/or citrate and are often provided in liquid, powder or tableted form. Three main types of water softening agents are described below.

1) Ion exchange agents: These agents include alkali metal aluminosilicates either crystalline, amorphous or a mixture of thereof. Such aluminosilicates of the general formula (Na₂O)_{0.8-1.5} · Al₂O₃ · (SiO₂)_{0.8-6} typically have a calcium ion exchange capacity of at least 50 mg CaO per gram of aluminosilicate and incorporate some water. Preferred sodium aluminosilicates within the above formula contain 1.5-3 SiO₂ units. Both amorphous and crystalline aluminosilicates can be prepared by reaction between sodium silicate and sodium aluminate, as described in the literature. Suitable crystalline sodium aluminosilicate ionexchange detergency builders are described, for example, in GB-A-1429143 (Procter & Gamble). The preferred sodium aluminosilicates of this type are the well known commercially available zeolites A and X, and mixtures thereof. Also of interest is zeolite P described in EP-A-384 070 (Unilever). Another class of ion exchange agents which can be used for removing calcium and magnesium ions from water are the layered sodium silicate builders, such as are disclosed in US-A-4,464,839 and US-A-4,820,439 and also referred to in EP-A-551 375. These materials are defined in US-A-4,820,439 as being crystalline layered, sodium silicate of the general formula NaMSiₓO₂ₓ₊₁. Y HgO where M denotes sodium or hydrogen, x is from 1.9 to 4 and Y is from 0 to 20.

2) Ion capture agents: Agents which prevent metal ions from forming insoluble salts or reacting with surfactants, such as e.g. polyphosphate, monomeric polycarbonates, such as citric acid or salts thereof, EDTA, aligns or alginates.

3) Anti-nucleating agents: Agents which prevent seed crystal growth, e.g. polycarbonate polymers, such as polyacrylates, acrylic/maleic copolymers, and acrylic phosphonates, and sulfonates.

EP-A-0 628 627 (Benckiser GmbH) discloses a water-soluble water softener in form of a tablet comprising A) 60-98 % by weight of a combination of a) citrate and/or citric acid and b) a polymer with water softening effect in a weight ratio between a:b of from 70:30 to 50:50, preferably of from 65:35 to 55:45, B) of from 0.5 to 6% by weight of polyethylene glycol and C) of from 0 to 38% by weight of further adjuvants. The water softening tablets known from EP-A-0 628 627 are thus characterised by a special ratio between citrate and/or citric acid and polymer and by a comparatively high content of polymer, preferably of from 20 to 40% by weight.

EP-A-0 812 808 (Cleantabs A/S) discloses water softening tablets comprising in addition to optional usual adjuvants and additives 10 to 70 wt-% of a polyfunctional carboxylic acid and/or a salt thereof calculated as trisodium citrate dihydrate, 15 to 45 wt-% of a carbonate and/or bicarbonate, 1 to 6 wt-% of a binder, 2 to 19 wt-% of a polymer, 0 to 45 wt-% of a layered silicate and/or alkali metal silicate, 0 to 15 wt-% of a disintegrating agent and 0 to 5 wt-% of a precipitation inhibitor. The water softening tablets of EP-A-0 812 808 are reported to have a good water softening effect, a fast rate of dissolution in the washing water ensuring their performance while still being environmentally friendly and storage stable.

These formulations have the disadvantage that their performance lacks on the dispersing of particles for the soil from the substrates to be cleaned. These particles can cause incrustation by redepositing on the substrates, heating element or inside of the machine.

It is the object of the present invention to provide an improved water softener composition by limiting the incrustation that can be caused by the soil that is present.

### DESCRIPTION OF THE INVENTION

It has been found that the above-defined object can be achieved by providing a water soluble composition, preferably a water softener composition, according to claim 1 of the invention. Said composition of the invention comprises in addition to optional adjuvants and additives:
a) one or more polycarboxylic acid homopolymer(s) or salt(s) thereof in an amount of 1 to 90 wt.-%,
b) one or more low molecular polycarboxylic acid(s) or salt(s) thereof in an amount of 1 to 90 wt.-%, and
c) one or more copolymer(s) based on maleic acid or (meth)acrylic acid or salt(s) thereof in an amount of 0.1 to 25 wt.-%, wherein the one or more comonomer(s) is/are selected from the group comprising
   i. hydrophobic monomers,
   ii. hydrophobic monomers with hydrophilic groups, and
   iii. hydrophilic monomers with hydrophilic groups,
   or mixtures thereof.

a) "Polycarboxylic acid homopolymers" are defined as organic homopolymers of unsaturated mono, di- or polycarboxylic acids. Examples of polycarboxylic acid homopolymers in the sense of the present invention are polymers of acrylic acid, methacrylic acid, hydroxyacrylic acid, maleic acid, itaconic acid, mesaconic acid, acotinic acid, methylene malonic acid, citraconic acid. Also included by the term polycarboxylic acid homopolymers are the derivatives and/or salts thereof. The term "poly(meth)acrylic acid" includes polyacrylic acids, polymethacrylic acids as well as mixtures thereof. The molecular weight of the polycarboxylic acid homopolymers in context with the present invention is usually in the range of from above 1000 up to 250,000, preferably in the range from above 1000 to 70,000. A particularly preferred polymer is polyacrylic acid with a molecular weight in the range from above 1000 to 100,000, preferably in the range from above 1000 to 70,000. The polycarboxylic acid homopolymers in context with the present invention are provided either as solids or in solution, preferably in 20-90 wt.-% aqueous solution, more preferably in 30-70 wt.% aqueous solution.

b) "Low molecular polycarboxylic acids" are defined as organic carboxylic acids with 2 or more carboxylic groups and of low molecular weight. Examples of low molecular polycarboxylic acids are citric acid, lactic acid, malic acid, maleic acid, tartaric acid, agaric acid, trimellitic acid, succinic acid and the like. Also included by the term low molecular polycarboxylic acids are the derivatives and/or salts thereof. The molecular weight of the low molecular polycarboxylic acids in context with the present invention is usually up to 1000. Particular preferred acids are citric acid and/or trisodium citrate. The the low molecular polycarboxylic acids in context with the present invention are provided either as solids or in solution, preferably in 20-90 wt.-% aqueous solution, more preferably in 30-70 wt.-% aqueous solution.

c) "Maleic acid or (meth)acrylic acid based copolymers" in the sense of the present invention are copolymers, including also e.g. terpolymers, of (i) one or more hydrophobic monomers or (ii) one or more hydrophobic monomers with one or more hydrophilic group(s) or (iii) one or more hydrophilic monomers with hydrophilic groups or mixtures thereof with maleic acid, acrylic acid and/or methacrylic acid. The term "(meth)acrylic acid" includes acrylic acid, methacrylic acid as well as mixtures thereof. The molecular weight of the maleic acid or (meth)acrylic acid based copolymers in context with the present invention is usually in the range of from above 1000 up to 100,000, preferably in the range from above 1000 to 60,000. Also included by the term maleic acid or (meth)acrylic acid based copolymers are the derivatives and/or salts thereof. The maleic acid or (meth)acrylic acid based copolymers in context with the present invention are provided either as solids or in solution, preferably in 20-90 wt.-% aqueous solution, more preferably in 30-70 wt.-% aqueous solution.

ci) The "hydrophobic monomer(s)" of the maleic acid or (meth)acrylic acid based copolymers are monomers which have a hydrophobic character either in their monomeric form or even after their polymerisation in the polymer chain. Types of hydrophobic monomers are olefines or alpha-olefines with carbon chain lengths from 3 to 16 carbon atoms, unsaturated cyclic hydrocarbons, aryl compounds. Preferred types of hydrophobic monomers are olefins or alpha-olefins with carbon chain lengths from 3 to 16 carbon atoms and aryl compounds.

Examples of hydrophobic monomers are styrene, methyl styrene, 2-ethylhexyl acrylate, octylacrylate, lauryl acrylate, stearyl acrylate, behenyl acrylate, 2-ethylhexyl methacrylate, octylmethacrylate, lauryl methacrylate, stearyl methacrylate, behenyl methacrylate, 2-ethylhexyl acrylamide, octylacrylamide, lauryl acrylamide, stearyl acrylamide, behenyl acrylamide, propyl acrylate, butyl acrylate, pentyl acrylate, hexyl acrylate, 1-vinyl naphthalene, 2-vinyl naphthalene, 3-methyl styrene, 4-propyl styrene, t-butyl styrene, 4-cyclohexyl styrene, 4-dodecyl styrene, 2-ethyl-4-benzyl styrene, 4-(phenylbutyl) styrene, 1-propene, 2-propene, 1-butene, 2-butene, 1-pentene, 2-pentene, 1-hexene, 2-hexene, 3-hexene, 1-heptene, 2-heptene, 3-heptene, 1-octene, 2-octene, 3-octene, 4-octene. Preferred are styrene, methyl styrene and mentioned olefins.

Cii and ciii) The "hydrophilic group(s)" of the monomer(s) of the maleic acid or (meth)acrylic acid based copolymers give the monomer where it is attached to an increased hydrophilic character. The hydrophilic group(s) is/are typically one or more selected from the group comprising hydroxyl, carboxamide, amine, carboxylate, carboxyl, phosphate, phosphono, phosphino, phosphonate, sulfonyl or sulfo group and the like.

cii) The "hydrophobic monomers with hydrophilic groups" of the maleic acid or (meth)acrylic acid based copolymers are monomers with a hydrophobic character that have functional groups that give the monomer a more hydrophilic or less hydrophobic character either in their monomeric form or even after their polymerisation in the polymer chain. The functional groups are those listed under the topic "hydrophilic group(s)".

ciii) The "hydrophilic monomers with hydrophilic groups" of the maleic acid or (meth)acrylic acid based copolymers are monomers with functional groups which have a hydrophilic character either in their monomeric form or even after their polymerisation in the polymer chain. The functional groups are those listed under the topic "hydrophilic group(s)".

Examples of hydrophilic monomers with hydrophilic groups are (meth)allyl sulphonic acid, vinyl sulphonic acid, vinyl phosphonic acid, dimethylacrylamide, dimethylaminopropylmethacrylate, diethylaminopropylmethacrylate, vinyl formamide, vinyl acetamide, vinyl pyrrolidone, vinyl imidazole, phenyl (meth)allyl ether sulfonic acid, 2-acrylamido-2-methyl propane sulfonic acid (AMPS), sulphonated styrene, allyloxybenzene sulfonic acid, allyloxy-2-hydroxy propyl sulfonic acid, 2-acryloxypropionic acid or (meth)allyl phosphonic acid, and the like or salts thereof. For example, all sulfonic acids may also be provided as phosphonic acids or vice versa.

In a preferred embodiment of the present invention the weight ratio of the polycarboxylic acid homopolymer(s) to the low molecular polycarboxylic acid(s) is 5:1 to 1:10, preferably 3:1 to 1:6 and even more preferably 1:1 to 1:4.

In a further preferred embodiment of the present invention the weight ratio of the polycarboxylic acid homopolymer(s) to the maleic acid or (meth)acrylic acid based copolymer(s) is 20:1 to 1:1, preferably 8:1 to 2:1 and even more preferably 5:1 to 3:1.

In still another preferred embodiment of the present invention the weight ratio of the low molecular polycarboxylic acid(s) to the maleic acid or (meth)acrylic acid based copolymer(s) is 30:1 to 1:2, preferably 20:1 to 5:1 and even more preferably 15:1 to 6:1.

Other ingredients, which, if desired, may be included in the composition according to the invention are further conventional adjuvants, optical brighteners, bleaches, bleach activators, anti-lumping agents, colour transferring inhibitors, lubricating agents, anti-redeposition agents, agents making the textiles soil-repellent, enzymes, rinsing aids, dyes, deodorising agents, antioxidants, perfumes, sulphates, bicarbonates, PEG, surfactants and without being restricted to the mentioned ingredients.

In a further aspect of the invention the composition, preferably a water softener composition, comprises one or more of several co-granulates wherein these co-granulates comprises a combination of at least two of the above described polycarboxylic acid homopolymer(s), the maleic acid or (meth)acrylic acid based copolymer(s) and the low molecular polycarboxylic acid(s). In these embodiments of the invention the essential compound(s) being not comprised in the respective co-granulate are nevertheless part of the composition. In other words the composition according to the invention comprises the essential polycarboxylic acid homopolymer(s), the low molecular polycarboxylic acid(s) and the maleic or (meth)acrylic acid based copolymer(s) as defined in claim 1 either as part of a certain co-granulate which itself is part of the composition or as part of the composition without such co-granulates.

The co-granulates may be preferred in the preparation of compressed tablets. Compressed tablets are in many cases a preferred form of detergent formulations, especially of laundry or automatic dishwashing detergent formulations. A certain co-granulate may improve the tabletability properties because some ingredient can loose their crystalline form. Another certain co-granulate may level out the hygroscopicity of its ingredients or may provide both of the above effects.

In one certain embodiment of the invention the co-granulate comprises a mixture of one or more polycarboxylic acid homopolymer(s), of one or more low molecular polycarboxylic acid(s) and of one or more maleic or (meth)acrylic acid based copolymer(s). This type of co-granulate is preferred if both the tabletability properties should be improved and the hygroscopicity of its ingredients should be levelled out.

In another certain embodiment of the invention the co-granulate comprises a mixture of one or more polycarboxylic acid homopolymer(s) and of one or more maleic or (meth)acrylic acid based copolymer(s). In this embodiment the one or more low molecular polycarboxylic acid(s) are not part of the co-granulate but of the composition. This type of co-granulate is preferred if especially the hygroscopicity of its ingredients should be levelled out.

In a further certain embodiment of the invention the co-granulate comprises a mixture of one or more polycarboxylic acid homopolymer(s) and of one or more low molecular polycarboxylic acid(s). In this embodiment the one or more maleic or (meth)acrylic acid based copolymer(s) are not part of the co-granulate but of the composition.

In a further certain embodiment of the invention the co-granulate comprises a mixture of one or more maleic or (meth)acrylic acid based copolymer(s) and of one or more low molecular polycarboxylic acid(s). In this embodiment the one or more polycarboxylic acid homopolymer(s) are not part of the co-granulate but of the composition.

The average particle size of the above described co-granulates is in the range of from 0.05 to 3.0 mm, preferably in the range of from 0.1 to 2.0 mm, and even more preferably in the range of from 0.2 to 1.5 mm.

With respect to the compressed tablets a disintegrating agent may advantageously form part of the composition, the co-granulate or the tablet according to the invention. Such disintegrating agents are known in the art. Disintegrating agents swell at contact with water thereby accelerating the disintegration of the tablets. Examples of disintegrating agents are e. g. starch derivatives, cellulose compounds, polyvinylpyrrolidone compounds, polyvinylpolypyrrolidone compounds, bentonite compounds, alginates, gelatine and pectines. When used, the amount of disintegrating agent is typically in the range of from 1 to 15% by weight.

According to the present invention the several co-granulates of a polycarboxylic acid homopolymer and/or a low molecular polycarboxylic acid and/or a maleic or (meth)acrylic acid based copolymer as defined above may be prepared according to any conventional method known in the art.

However, a typical method for the preparation of a co-granulate being part of the water soluble composition according to the invention comprises the steps of: a) optionally dissolving all compounds the co-granulate is prepared from, either individually or as a mixture of some or all compounds, in a solvens, preferably in water, b) optionally adjusting pH of the solution(s) to the desired level, c) if applicable blending the solutions, d) providing a homogenious (aqueous) solution comprising a polycarboxylic acid homopolymer and/or a low molecular polycarboxylic acid and/or a maleic or (meth)acrylic acid based copolymer as defined above and as optionally prepared according to steps a to c, e) optionally adjusting the pH to the desired level, f) drying the solution into the desired particle size, and if desired g) grinding the co-granulate into the desired particle size. Appropriate methods of drying are, for example, spray drying, drum drying or freeze drying.

However, a preferred method for the preparation of a co-granulate being part of the water soluble composition according to the invention comprises the steps of: a) making or providing an (aqueous) solution of all desired ingredients including processing aids, b) adjusting the pH to the desired level, c) drying the solution into the desired particle size, and if desired d) grinding the co-granulate into the desired particle size. Appropriate methods of drying are, for example, spray drying, drum drying or freeze drying.

However, a preferred method for the preparation of a co-granulate being part of the water soluble composition according to the invention comprises the steps of: a) making or providing an (aqueous) solution of the desired ingredients, b) adjusting the pH to the desired level, c) spray the solution on a solid particle, d) dry the coated particle on a fluid bed, and if desired d) the coated particle can be sieved to the desired particle size.

The compositions, preferably the water softener composition, according to the present invention may preferably be used separately or in laundry or e. g. automatic dishwashing compositions. However, the compositions may also be used to soften water in other cleaning processes such as hard surfaces cleaning using, for example, a hand-cloth or mop. The compositions according to the invention may also be used, for example, when cleaning windows, tiled surfaces, shower screens, dirty tableware and kitchenware, sanitary articles, cars or kitchen articles.

## Claims

1. A composition as a soluble water softener composition or for the preparation of a soluble water softener or detergent composition comprising:
a) one or more polycarboxylic acid homopolymer(s) or salt(s) thereof in an amount of 1 to 90 wt.-%,
b) one or more low molecular polycarboxylic acid(s) or salt(s) thereof in an amount of 1 to 90 wt.-%,
c) one or more copolymer(s) based on maleic acid or (meth)acrylic acid or salt(s) thereof in an amount of 0.1 to 25 wt.-%, wherein the one or more comonomer(s) is/are selected from the group comprising
i. hydrophobic monomers,
ii. hydrophobic monomers with hydrophilic groups, and
iii. hydrophilic monomers with hydrophilic groups,
or mixtures thereof.

2. The composition according to claim 1, wherein the polycarboxylic acid homopolymer(s) is/are selected from the group comprising polymers of acrylic acid, methacrylic acid, maleic acid and/or salts thereof

3. The composition according to any of the preceding claims, wherein the low molecular polycarboxylic acid is citric acid, lactic acid, malic acid, maleic acid, tartaric acid, agaric acid, trimellitic acid, succinic acid or a salt thereof.

4. The composition according to any of the preceding claims, wherein the hydrophobic monomer(s) of the maleic acid or (meth)acrylic acid based copolymers is/are selected from the group comprising (alpha)olefines, unsaturated cyclic hydrocarbons and aryl compounds.

5. The composition according to claim 4, wherein the hydrophobic monomer(s) are selected from the group comprising styrene, methyl styrene, 2-ethylhexyl acrylate, octylacrylate, lauryl acrylate, stearyl acrylate, behenyl acrylate, 2-ethylhexyl methacrylate, octylmethacrylate, lauryl methacrylate, stearyl methacrylate, behenyl methacrylate, 2-ethylhexyl acrylamide, octylacrylamide, lauryl acrylamide, stearyl acrylamide, behenyl acrylamide, propyl acrylate, butyl acrylate, pentyl acrylate, hexyl acrylate, 1-vinyl naphthalene, 2-vinyl naphthalene, 3-methyl styrene, 4-propyl styrene, t-butyl styrene, 4-cyclohexyl styrene, 4-dodecyl styrene, 2-ethyl-4-benzyl styrene, 4-(phenylbutyl) styrene, 1-propene, 2-propene, 1-butene, 2-butene, 1-pentene, 2-pentene, 1-hexene, 2-hexene, 3-hexene, 1-heptene, 2-heptene, 3-heptene, 1-octene, 2-octene, 3-octene, 4-octene, preferably styrene, methyl styrene or an olefin.

6. The composition according to any of the preceding claims, wherein the hydrophilic group(s) of the monomer(s) of the maleic acid or (meth)acrylic acid based copolymers is/are selected from the group comprising the hydroxyl, carboxamide, amine, carboxylate, carboxyl, phosphate, phosphono, phosphino, phosphonate, sulfonyl or sulfo group.

7. The composition according to any of the preceding claims, wherein the hydrophilic group(s) of the hydrophilic monomer(s) is/are selected from the group comprising (meth)allyl sulphonic acid, vinyl sulphonic acid, vinyl phosphonic acid, dimethylacrylamide, dimethylaminopropylmethacrylate, diethylaminopropylmethacrylate, vinyl formamide, vinyl acetamide, vinyl pyrrolidone, vinyl imidazole, phenyl (meth)allyl ether sulfonic acid, 2-acrylamido-2-methyl propane sulfonic acid, sulphonated styrene, allyloxybenzene sulfonic acid, allyloxy-2-hydroxy propyl sulfonic acid, 2-acryloxypropionic acid and (meth)allyl phosphonic acid.

8. The composition according to any of the preceding claims, wherein the weight ratio of the polycarboxylic acid homopolymer(s) to the low molecular polycarboxylic acid(s) is 5:1 to 1:10, preferably 3:1 to 1:6.

9. The composition according to any of the preceding claims, wherein the weight ratio of the polycarboxylic acid homopolymer(s) to the (meth)acrylic acid based copolymer(s) is 20:1 to 1:1, preferably 8:1 to 2:1.

10. The composition according to any of the preceding claims, wherein the weight ratio of the low molecular polycarboxylic acid(s) to the (meth)acrylic acid based copolymer(s) is 30:1 to 1:2, preferably 20:1 to 5:1.

11. The composition according to any of the preceding claims, further comprising one or more adjuvants and/or additives selected from the group comprising optical brighteners, bleaches, bleach activators, anti-lumping agents, dye transferring inhibitors, lubricating agents, anti-redeposition agents, soil release polymers, enzymes, rinsing aids, dyes, deodorising agents, antioxidants, perfumes, sulphates, (bi)carbonates, PEG and surfactants.

12. A co-granulate comprising the composition according to any of the preceding claims.

13. A co-granulate comprising the composition according to any of the claims 1 to 11 but being free of low molecular polycarboxylic acid(s).

14. A co-granulate comprising the composition according to any of the claims 1 to 11 but being free of polycarboxylic acid homopolymer(s).

15. A co-granulate comprising the composition according to any of the claims 1 to 11 but being free of maleic or (meth)acrylic acid based copolymer(s).

16. A co-granulate according to any of the claims 12 to 15, wherein the average particle size of the granulate is between 0.1 and 2.0 mm.

17. A soluble water softener composition or a detergent formulation comprising the composition and/or the co-granulate according to any of the preceding claims.

18. The detergent formulation according to claim 17, wherein the formulation is a laundry or automatic dishwashing detergent formulation.

19. A compressed tablet comprising the composition, the soluble water softener composition, the co-granulate and/or the detergent formulation according to any of the preceding claims.

20. The co-granulate, the soluble water softener composition, detergent formulation or tablet according to any of the preceding claims, wherein one or more of its components is/are in a crystalline, microcrystalline, amorphous or other solid form.

21. Use of the composition according to any of the claims 1 to 11 in a water soluble water softener composition or a detergent formulation.

22. Use of one or more maleic acid or (meth)acrylic acid based copolymer(s) in a water soluble water softener composition or a detergent formulation, wherein the respective comonomer(s) are those as defined in one of the claims 4 to 7.

23. Use of a co-granulate comprising one or more maleic acid or (meth)acrylic acid based copolymer(s) in a water soluble water softener composition or in a detergent formulation or for the preparation of a compressed tablet which can be used in a cleaning process, wherein the respective comonomer(s) are those as defined in one of the claims 4 to 7.

24. Method for the preparation of a co-granulate according to any of the claims 12 to 16 comprising the steps of:
a) optionally dissolving all compounds the co-granulate is prepared from, either individually or as a mixture of some or all compounds, in a solvens, preferably in water,
b) optionally adjusting pH of the solution(s) to the desired level,
c) if applicable blending the solutions,
d) providing a homogenious solution comprising a polycarboxylic acid homopolymer and/or a low molecular polycarboxylic acid and/or a maleic or (meth)acrylic acid based copolymer as optionally prepared according to steps a to c,
e) optionally adjusting the pH to the desired level,
f) drying the solution into the desired particle size, and
g) if desired grinding the co-granulate into the desired particle size.
